# EUROPÄISCHE PATENTSCHRIFT

(11) **EP 2 962 765 B1**
(45) Veröffentlichungstag und Bekanntmachung des Hinweises auf die Patenterteilung: **31.05.2017**
(21) Anmeldenummer: 15001955.2
(22) Anmeldetag: 01.07.2015
(51) Int. Cl.: B05B 7/24, B05B 7/14, A01M 7/00

(54) **RÜCKENGETRAGENES SPRÜHGERÄT UND BEHÄLTER FÜR SPRÜHMITTEL FÜR EIN RÜCKENGETRAGENES SPRÜHGERÄT**
BACK-MOUNTED SPRAYER AND CONTAINER FOR SPRAY FOR A BACK-MOUNTED SPRAYER
PULVERISATEUR PORTE SUR LE DOS ET RECIPIENT POUR AGENT A PULVERISER POUR UN PULVERISATEUR PORTE SUR LE DOS

(30) Priorität: 03.07.2014 DE 102014009838
(43) Veröffentlichungstag der Anmeldung: 06.01.2016
(73) Patentinhaber: Andreas Stihl AG & Co. KG, 71336 Waiblingen (DE)
(72) Erfinder: Heide, Klaas, 23758 Oldenburg/Holstein (DE); Wiedmann, Hans-Georg, 71522 Backnang (DE); Langhans, Klaus, 71364 Winnenden (DE)
(74) Vertreter: Reinhardt, Annette

(56) Entgegenhaltungen:
- EP-A1- 2 135 816
- EP-A1- 2 923 570
- US-A- 6 089 477
- US-A1- 2007 034 710

## Beschreibung

Die Erfindung betrifft ein rückengetragenes Sprühgerät der im Oberbegriff des Anspruchs 1 angegebenen Gattung und einen Behälter für Sprühmittel für ein rückengetragenes Sprühgerät der im Oberbegriff des Anspruchs 19 angegebenen Gattung.

Aus der DE 10 2007 023 409 A1 ist ein rückengetragenes Sprühgerät mit einem Behälter für Sprühmittel bekannt. Der Behälter für Sprühmittel ist als Blasformteil ausgebildet und besitzt einen näherungsweise rechteckigen Querschnitt. An der Oberseite des Behälters ist ein Schraubdeckel angeordnet, der auf eine runde Einfüllöffnung aufgesetzt ist. Die Querschnittsfläche der Einfüllöffnung ist deutlich kleiner als die größte Innenquerschnittsfläche des Behälters für Sprühmittel. Bei üblichen Behältern für Sprühmittel mit einem Schraubdeckel ist die Fläche der Einfüllöffnung deutlich kleiner als 50% der größten horizontalen Innenquerschnittsfläche des Behälters. Dadurch können das Einfüllen von Sprühmittel und die Reinigung des Behälters erschwert sein.

Die US 2007/0034710 A1 zeigt ein schultergetragenes Sprühmittelgerät mit einem Sprühmittelbehälter, der an seiner Einfüllöffnung seine größte Innenquerschnittsfläche besitzt.

Die US 6,089,477 A zeigt ein rückengetragenes Sprühmittelgerät.

Die EP 2 135 816 A1 zeigt einen Verriegelungsmechanismus zur Fixierung eines Deckels an einem Behälter.

Der Erfindung liegt die Aufgabe zugrunde, ein rückengetragenes Sprühgerät der gattungsgemäßen Art zu schaffen, bei dem Sprühmittel einfach in den Behälter einzufüllen ist und das eine einfache Reinigung des Behälters erlaubt. Eine weitere Aufgabe der Erfindung besteht darin, einen Behälter für Sprühmittel für ein rückengetragenes Sprühgerät anzugeben, der ein einfaches Einfüllen von Sprühmittel und eine einfache Behälterreinigung erlaubt.

Diese Aufgabe wird bezüglich des rückengetragenen Sprühgeräts durch ein Sprühgerät mit den Merkmalen des Anspruchs 2 gelöst. Bezüglich des Behälters für Sprühmittel wird die Aufgabe durch einen Behälter mit den Merkmalen des Anspruchs 1 gelöst.

Um ein einfaches Einfüllen von Sprühmittel und eine einfache Reinigung des Behälters zu erlauben, ist vorgesehen, dass der Behälter an der Einfüllöffnung über mindestens 60% seiner größten Innenquerschnittsfläche zu öffnen ist. Die größte Innenquerschnittsfläche ist dabei die größte horizontale Innenquerschnittsfläche des Behälters in Abstellposition des Sprühgeräts in einem Sprühmittelbereich. Der Sprühmittelbereich ist der Bereich des Behälters, der für Sprühmittel vorgesehen ist und der sich bis zu einer maximal zulässigen Füllhöhe des Behälters erstreckt. Die größte horizontale Innenquerschnittsfläche ist demnach die größte Fläche des Flüssigkeitsspiegels, wenn der Behälter in Abstellposition des Sprühgeräts aus dem leeren Zustand bis zur maximal zulässigen Füllhöhe befüllt wird.

Dadurch, dass der Behälter an der Einfüllöffnung über mindestens 60% seiner größten Innenquerschnittsfläche zu öffnen ist, ist das Befüllen des Behälters vergleichsweise einfach. Beim Reinigen des Behälters kann ein Benutzer alle Bereiche gut erreichen, und alle Bereiche des Sprühmittelbehälters sind für den Bediener gut einsehbar. Vorzugsweise ist der Behälter an der Einfüllöffnung über mindestens 90% seiner größten Innenquerschnittsfläche zu öffnen. Besonders vorteilhaft ist der Behälter an der Einfüllöffnung über seine gesamte größte Innenquerschnittsfläche zu öffnen. Dadurch ergibt sich eine sehr große Einfüllöffnung. Auch das Entleeren des Behälters ist vereinfacht, da der Behälter aus einer Lage, in der die Einfüllöffnung horizontal angeordnet ist, nur um etwa 90° gekippt werden muss und nicht wie bei bekannten Sprühmittelbehältern mit kleiner, runder Einfüllöffnung um näherungsweise 180°.

Vorteilhaft besitzt die Einfüllöffnung einen unrunden Querschnitt. Bei den bekannten runden Schraubdeckeln ist die Größe der Einfüllöffnung durch die Tiefe des Behälters, also die Erstreckung des Behälters senkrecht zur Ebene einer Rückentragplatte einer Rückentrage bzw. in Richtung vom Rücken des Benutzers aus nach hinten, begrenzt. Ein unrunder Querschnitt der Einfüllöffnung lässt eine deutlich größere Einfüllöffnung zu. Insbesondere, wenn der Behälter an der Einfüllöffnung über seine gesamte größte Innenquerschnittsfläche zu öffnen ist, kann der Behälter in einem anderen Herstellverfahren als dem bisher für Behälter für Sprühmittel üblicherweise genutzten Blasformverfahren hergestellt werden, nämlich beispielsweise in einem Spritzgussverfahren. Dadurch ergeben sich größere Freiheitsgrade bei der Gestaltung des Behälters.

Um eine einfache und schnelle Fixierung des Deckels an dem Behälter zu erlauben, ist vorgesehen, dass das Sprühgerät eine Verriegelungsvorrichtung zur Fixierung des Deckels an dem Behälter besitzt. Die Verriegelungsvorrichtung umfasst dabei ein schwenkbar gelagertes Verriegelungselement und ein Betätigungselement, wobei das Verriegelungselement die Verriegelung bewirkt und wobei die Verriegelungsvorrichtung durch Verschwenken des Betätigungselements zu lösen und zu verriegeln ist. Dadurch kann der Behälterdeckel auf einfache Weise durch Verschwenken des Betätigungselements an dem Behälter fixiert oder von diesem gelöst werden. Vorteilhaft ist das Betätigungselement gegenüber dem Verriegelungselement verschwenkbar. Dadurch kann die Stellung des Betätigungselements von der Stellung des Verriegelungselements teilweise entkoppelt werden. Vorteilhaft beträgt der Winkel, um den das Betätigungselement gegenüber dem Verriegelungselement verschwenkbar ist, mindestens etwa 30°, vorzugsweise mehr als etwa 60°. Vorzugsweise besitzt das Betätigungselement eine erste Endstellung, in der die Verriegelungsvorrichtung geschlossen ist und eine zweite Endstellung, in der die Verriegelungsvorrichtung offen ist. Dies ermöglicht eine einfache Bedienung. Bei Anordnung des Betätigungselements in einer seiner Endstellungen ist für den Bediener unmittelbar ersichtlich, ob die Verriegelungsvorrichtung geschlossen oder offen ist.

Vorteilhaft umfasst der Behälter einen schwenkbar gelagerten Tragbügel, der das Betätigungselement bildet. Der Tragbügel weist vorteilhaft eine Tragstellung auf, die im Schwenkweg zwischen der ersten Endstellung und der zweiten Endstellung liegt. In der Tragstellung kann der Behälter vorteilhaft mit dem Tragbügel getragen werden. Vorteilhaft wirkt der Tragbügel im Schwenkweg von einer Endstellung in die andere Endstellung erst nach dem Überschwenken der Tragstellung auf das Verriegelungselement. Dadurch kann die Verriegelungsvorrichtung in Tragstellung des Tragbügels sowohl offen als auch geschlossen sein. Bei geschlossener Verriegelungsvorrichtung kann der Behälter an dem Tragbügel getragen werden. Bei geöffneter Verriegelungsvorrichtung kann der Deckel in Tragstellung des Tragbügels vom Bediener einfach abgenommen oder weggeschwenkt werden. Vorteilhaft liegt der Tragbügel in der ersten Endstellung mindestens teilweise in einer Vertiefung des Deckels. Dadurch steht der Tragbügel im Betrieb nicht oder nur wenig über die Außenkontur des Deckels heraus. Für den Bediener ist einfach sichtbar, dass der Deckel verschlossen ist. Der Tragbügel ist gegen unbeabsichtigte Betätigung geschützt.

Vorteilhaft ist der Deckel mit mindestens einem Schwenklager schwenkbar am Behälter gelagert. Das Schwenklager ist dabei vorteilhaft so ausgebildet, dass es eine Translationsbewegung des Deckels senkrecht zur Einfüllöffnung zulässt. Dadurch kann ein sicheres Schließen des Deckels gewährleistet werden. Es kann jedoch auch vorgesehen sein, dass der Deckel vom Behälter abnehmbar ist.

Zwischen dem Deckel und dem Behälter wirkt eine Dichtung, die bei geschlossenem Deckel in einem zwischen Deckel und Behälter gebildeten Aufnahmeraum angeordnet ist. Die Translationsbewegung des Deckels senkrecht zur Einfüllöffnung beim Schließen der Verriegelungsvorrichtung bewirkt vorteilhaft eine Anlage mindestens einer Dichtfläche der Dichtung an dem Behälter. Die Translationsbewegung kann einen ausreichenden Betätigungsweg für die Dichtung sicherstellen. Auch in den benachbart zur Schwenkachse des Schwenklagers angeordneten Bereichen der Dichtung kann eine sichere Abdichtung erreicht werden. Bei der Translationsbewegung des Deckels bewegt sich der Deckel vorteilhaft um mindestens etwa 1 mm, vorzugsweise um mindestens etwa 3 mm, insbesondere um mindestens etwa 5 mm.

Vorteilhaft stützt sich die Dichtung in geschlossenem Zustand des Deckels mit einer radialen Dichtfläche an einem den Aufnahmeraum zur Außenseite des Behälters hin begrenzenden Rand des Behälters ab. Die radiale Dichtfläche ist dabei eine Dichtfläche, die nach außen, also parallel zur Ebene der Einfüllöffnung wirkt. Zusätzlich ist eine axiale Dichtfläche an der Dichtung vorgesehen. Dadurch, dass die Dichtung sowohl mindestens eine axiale Dichtfläche als auch mindestens eine radiale Dichtfläche aufweist, wird eine besonders sichere Abdichtung erreicht. Die Dichtung ist am Deckel gehalten. Die Dichtung stützt sich mit der axialen Dichtfläche an einem umlaufenden Rand des Behälters ab, der bis zum Behälterinnenraum abfällt. Dadurch, dass der umlaufende Rand bis zum Behälterinnenraum abfällt, kann Sprühmittel, das im Bereich des Rands angeordnet war, in den Behälterinnenraum ablaufen. Es kann vorgesehen sein, dass die Dichtung zusätzlich das Sprühmittel in den Behälterinnenraum bewegt und dabei den Rand von Sprühmittel reinigt.

Die Dichtung ist vorteilhaft bandförmig ausgebildet. Die Breite der Dichtung beträgt an der axialen Dichtfläche vorteilhaft weniger als etwa 40% der Gesamthöhe der Dichtung in unbelastetem Zustand. Insbesondere beträgt die Breite der Dichtung an der axialen Dichtfläche weniger als etwa 30% der Gesamthöhe der Dichtung in unbelastetem Zustand. Durch die vergleichsweise schmale, hohe Ausbildung der Dichtung kann die Dichtung bereits mit geringer Kraft verformt werden, so dass die Dichtung sich nach außen wölbt und dadurch die radiale Abdichtung bewirkt. Auch eine Wölbung der Dichtung nach innen kann vorteilhaft sein, wenn eine radial innenliegende Dichtfläche vorgesehen ist. Die Begriffe "axial" und "radial" beziehen sich dabei auf die Richtung, in der der Deckel beim Schließen der Verriegelungsvorrichtung bewegt wird. "Axial" bedeutet parallel zur Bewegungsrichtung des Deckels und "radial" senkrecht zur Bewegungsrichtung des Deckels. Vorteilhaft besitzt der Deckel einen Rand, der den Aufnahmeraum für die Dichtung zum Behälterinnenraum hin begrenzt. Dadurch, dass die Begrenzung zum Behälterinnenraum hin am Deckel angeordnet ist, kann der Behälter so gestaltet werden, dass Sprühmittel, das am Rand angeordnet ist, ungehindert in den Behälterinnenraum abfließen kann. Eine einfache Gestaltung ergibt sich, wenn die Dichtung als umlaufendes Dichtband ausgebildet ist, dessen Höhe in unbelastetem Zustand mindestens etwa 2 cm beträgt. Vorteilhaft beträgt die Höhe der Dichtung in unbelastetem Zustand mindestens etwa 3 cm. Dadurch können eine gute Dichtwirkung und ausreichende Verformung sichergestellt werden.

Vorteilhaft ist an dem Behälter eine Befestigungsanordnung zur Fixierung an einer Rückentrage der Traganordnung angeformt. Dadurch, dass die Befestigungsanordnung nicht als separates Bauteil ausgebildet, sondern an dem Behälter angeformt ist, ergibt sich ein einfacher Aufbau mit wenigen Einzelteilen. Vorteilhaft ist der Behälter ein Spritzgussteil. Dadurch kann auf einfache Weise ein Behälter mit großer Einfüllöffnung hergestellt werden. Die Befestigungsanordnung zur Fixierung an der Rückentrage kann an dem Behälter einfach in einem Arbeitsschritt angespritzt werden. Der Behälter besteht dabei vorteilhaft aus Kunststoff.

Für einen Behälter für Sprühmittel für ein rückengetragenes Sprühgerät, wobei der Behälter eine Einfüllöffnung besitzt, die mit einem Deckel verschließbar ist, wobei der Behälter ein für Sprühmittel vorgesehen Sprühmittelbereich besitzt, der sich bis zu einer maximal zulässigen Füllhöhe erstreckt, und wobei der Sprühmittelbereich in einer Abstellposition des Sprühgeräts eine größte, horizontale Innenquerschnittsfläche besitzt, ist vorgesehen, dass der Behälter an der Einfüllöffnung über mindestens 60% seiner größten Innenquerschnittsfläche zu öffnen ist.

Ausführungsbeispiele der Erfindung werden im Folgenden anhand der Zeichnung erläutert. Es zeigen:
- Fig. 1: eine schematische, perspektivische Darstellung eines Sprühgeräts,
- Fig. 2: einen schematischen Schnitt durch das Sprühgerät aus Fig. 1,
- Fig. 3: eine perspektivische Darstellung des Behälters des Sprühgeräts aus Fig. 1,
- Fig. 4: eine vergrößerte Darstellung des Schwenklagers aus Fig. 3,
- Fig. 5: eine vergrößerte Darstellung der Verriegelungsvorrichtung aus Fig. 3,
- Fig. 6: den Behälter aus Fig. 3 in perspektivischer Darstellung bei geöffneter Verriegelungsvorrichtung,
- Fig. 7: den Behälter aus Fig. 6 in perspektivischer Darstellung bei geöffneter Verriegelungsvorrichtung in Tragstellung des Tragbügels,
- Fig. 8: eine perspektivische Darstellung eines Ausführungsbeispiels eines Behälters mit verriegeltem Deckel,
- Fig. 9: den Behälter aus Fig. 8 mit verriegeltem Deckel in Tragstellung des Tragbügels,
- Fig.: 10 den Behälter aus Fig. 8 mit geöffneter Verriegelungsvorrichtung,
- Fig. 11: einen Schnitt durch den Behälter aus Fig. 8,
- Fig. 12: die Einzelheit XII aus Fig. 11 in vergrößerter Darstellung,
- Fig. 13: den Behälter aus Fig. 11 in Schnittdarstellung bei geöffneter Verriegelungsvorrichtung,
- Fig. 14: die Einzelheit XIV aus Fig. 13 in vergrößerter Darstellung,
- Fig. 15: einen Schnitt durch den Deckel im Bereich der Einzelheit XIV bei vom Behälter abgenommenem Deckel,
- Fig. 16: eine Draufsicht auf den Behälter mit abgenommenem Deckel,
- Fig. 17: einen Schnitt entlang der Linie XVII-XVII in Fig. 16,
- Fig. 18: einen Schnitt entlang der Linie XVIII-XVIII in Fig. 16,
- Fig. 19: eine Ansicht von oben auf den Deckel des Behälters,
- Fig. 20: eine Ansicht von oben auf ein Ausführungsbeispiel eines Behälters,
- Fig. 21: einen Schnitt entlang der Linie XXI-XXI in Fig. 20,
- Fig. 22: eine Ansicht von oben auf ein Ausführungsbeispiel eines Behälters,
- Fig. 23: einen Schnitt entlang der Linie XXIII-XXIII in Fig. 22.

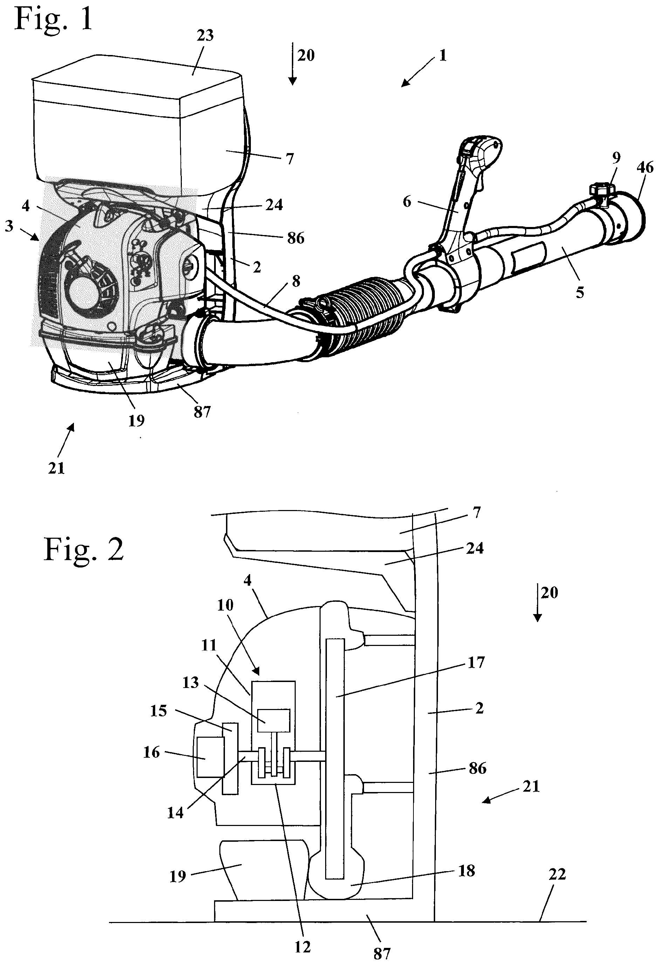

Fig. 1 zeigt schematisch ein Sprühgerät 1. Das Sprühgerät 1 dient zum Austrag von flüssigen oder pulverförmigen Sprühmitteln. Das Sprühgerät 1 besitzt eine Rückentrage 2, an der eine Gebläseeinheit 3 gehalten ist. Die Gebläseeinheit 3 besitzt ein Gehäuse 4. An der Rückentrage 2 ist außerdem ein Kraftstofftank 19 angeordnet, der einen im Gehäuse 4 angeordneten Antriebsmotor mit Kraftstoff versorgt. Die Gebläseeinheit 3 fördert einen Luftstrom durch ein Blasrohr 5, der das Blasrohr 5 an einer Austragsöffnung 46 verlässt. An der Rückentrage 2 ist ein Behälter 7 für Sprühmittel über einen Träger 24 gehalten. Für den Austrag von flüssigen Sprühmitteln ist vorgesehen, dass aus dem Behälter 7 eine Sprühmittelleitung 8 führt, die an einem Dosierventil 9 benachbart zur Austragsöffnung 46 ins Blasrohr 5 mündet und Sprühmittel in den durch das Blasrohr 5 geförderten Luftstrom zuführt. Pulverförmige Sprühmittel, also Stäubemittel, werden vorteilhaft direkt in eine Gebläsespirale 18 (Fig. 2) der Gebläseeinheit 3 zugeführt. Die Rückentrage 2 besitzt eine Rückenplatte 86, die im Betrieb am Rücken eines Bedieners angeordnet ist, sowie eine Bodenplatte 87, auf der der Tank 19 festgelegt ist. Die Bodenplatte 87 ragt etwa senkrecht vom unteren Bereich der Rückenplatte 86 nach hinten. Die Gebläseeinheit 3 stützt sich vorteilhaft über Schwingungsdämpfungselemente an der Bodenplatte 87 und/oder an der Rückenplatte 86 ab.

In den Figuren 1 und 2 ist das Sprühgerät 1 in einer Abstellposition 21 gezeigt, in der das Sprühgerät 1 mit der Bodenplatte 87 der Rückenplatte 2 auf einer horizontalen, ebenen Abstellfläche 22 steht. Wie Fig. 2 zeigt, ist der Behälter 7 bezogen auf die Wirkrichtung 20 der Schwerkraft oberhalb des Gehäuses 4 angeordnet. Fig. 2 zeigt schematisch den im Gehäuse 4 angeordneten Antriebsmotor 10. Im Ausführungsbeispiel ist der Antriebsmotor 10 ein Verbrennungsmotor. Der Antriebsmotor 10 kann jedoch auch ein Elektromotor sein. Der Antriebsmotor 10 besitzt einen Zylinder 11, in dem ein Kolben 13 hin- und hergehend gelagert ist. Der Kolben 13 treibt eine in einem Kurbelgehäuse 12 drehbar gelagerte Kurbelwelle 14 rotierend an. An der der Rückenplatte 86 zugewandten Seite des Antriebsmotors 10 ist ein Gebläserad 17 drehfest mit der Kurbelwelle 14 verbunden. Das Gebläserad 17 fördert einen Luftstrom durch eine Gebläsespirale 18 und in das an die Gebläsespirale 18 anschließende Blasrohr 5 (Fig. 1). An der dem Gebläserad 17 gegenüberliegenden Seite des Antriebsmotors 10 ist im Ausführungsbeispiel ein Lüfterrad 15 zur Förderung von Kühlluft für den Antriebsmotor 10 an der Kurbelwelle 14 festgelegt. Alternativ kann die Kühlung auch durch einen vom Gebläserad 17 geförderten, aus dem Blasluftstrom abgezweigten Luftstrom erfolgen. Anstatt eines Lüfterrads 15 kann dann ein Schwungrad zur Erzeugung der Zündenergie vorgesehen sein. An der dem Antriebsmotor 10 abgewandten Seite des Lüfterrads 15 ist eine Anwerfvorrichtung 16 für den Antriebsmotor 10 angeordnet. Die Anwerfvorrichtung 16 kann ein von Hand zu betätigender Seilzugstarter oder eine elektrische Anwerfvorrichtung sein.

Wie Fig. 1 zeigt, ist am Blasrohr 5 ein Handgriff 6 zum Führen des Blasrohrs 5 im Betrieb festgelegt. Der Handgriff 6 kann Bedienelemente zur Bedienung des Antriebsmotors 10 aufweisen.

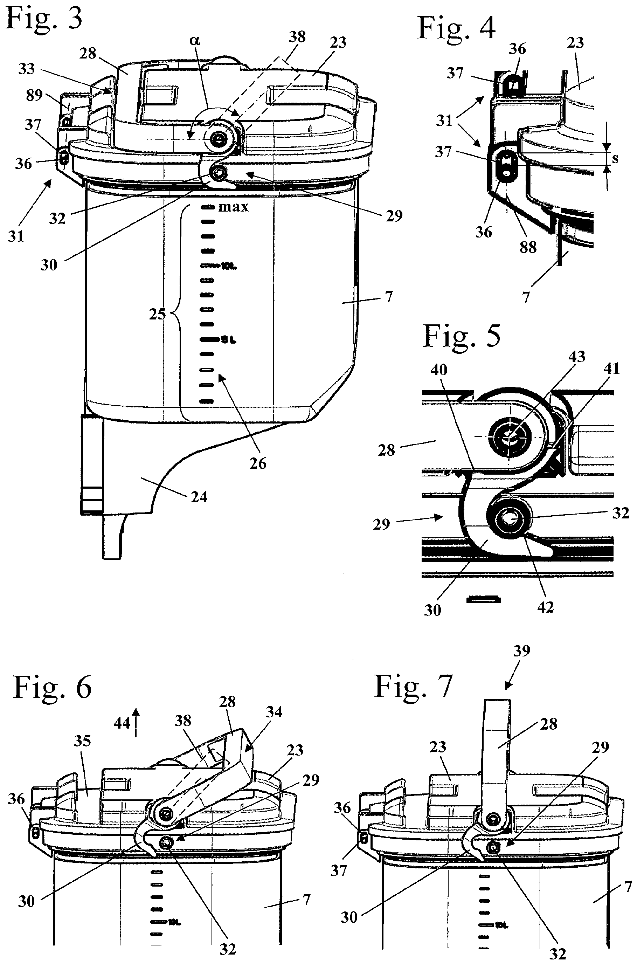

In Fig. 3 ist der Behälter 7 mit einem daran angeordneten Deckel 23 gezeigt. Der Behälter 7 besitzt einen Sprühmittelbereich 25, der sich bis zu einer maximal zulässigen Füllhöhe max erstreckt. Der Sprühmittelbereich 25 ist der Bereich, in den Sprühmittel vom Bediener eingefüllt werden darf, der also für Sprühmittel vorgesehen ist. Über die maximal zulässige Füllhöhe max hinaus ist eine Befüllung nicht zulässig. Der in Abstellposition 21 oberhalb der maximal zulässigen Füllhöhe max liegende Bereich gehört deshalb nicht zum Sprühmittelbereich 25. Im Ausführungsbeispiel besitzt der Behälter 27 an seiner Außenseite eine Skala 26, die dem Bediener anzeigt, wieviel Sprühmittel eingefüllt ist und wo sich die maximal zulässige Füllhöhe max befindet.

Der Deckel 23 ist über ein Schwenklager 31, das in Fig. 4 vergrößert gezeigt ist, am Behälter 7 schwenkbar gelagert. Das Schwenklager 31 umfasst zwei Lagerbolzen 36, die jeweils in einem Langloch 37 schwenkbar gehalten sind. Die Langlöcher 37 besitzen eine Längsrichtung 88, die senkrecht zur Schwenkachse 89 (Fig. 3) des Deckels 23 steht. Aufgrund der Langlöcher 37 ist der Deckel 23 in Längsrichtung 88 um einen begrenzten Weg beweglich. Der Weg s, um den der Deckel 23 gegenüber dem Behälter 7 in Längsrichtung 88 verschiebbar ist, beträgt vorteilhaft mindestens etwa 1 mm, insbesondere mindestens etwa 3 mm, vorzugsweise mindestens etwa 5 mm.

Wie die Figuren 3 und 5 zeigen, ist der Deckel 23 über eine Verriegelungsvorrichtung 29 am Behälter 7 fixiert. Die Verriegelungsvorrichtung 29 umfasst einen Tragbügel 28, der zur Betätigung der Verriegelungsvorrichtung 29 dient, sowie mindestens ein Verriegelungselement 30. Im Ausführungsbeispiel sind zwei Verriegelungselemente 30 an gegenüberliegenden Seiten des Behälters 7 angeordnet. Jedes Verriegelungselement 30 wirkt mit einem Ende des Tragbügels 28 zusammen. Die Verriegelungselemente 30 sind hakenförmig ausgebildet und wirken mit am Behälter 7 festgelegten Verriegelungsbolzen 32 zusammen. Der Tragbügel 28 und jedes Verriegelungselement 30 sind um eine gemeinsame Schwenkachse 43 (Fig. 5) am Deckel 23 schwenkbar gehalten. Die Verriegelungsbolzen 32 sind am Behälter 7 festgelegt, insbesondere einteilig mit dem Behälter 7 ausgebildet.

Der Tragbügel 28 ist in Fig. 3 in einer ersten Endstellung 33 gezeigt. In dieser Endstellung ist die Verriegelungsvorrichtung 29 geschlossen. In Abstellposition 21 ist die Schwenkachse 43 oberhalb des Verriegelungsbolzens 32 angeordnet. In dieser Stellung untergreift das Verriegelungselement 30 den Verriegelungsbolzen 32 und fixiert dadurch den Deckel 23 am Behälter 7. Wie Fig. 5 auch zeigt, besitzt das Verriegelungselement 30 eine Rasterhöhung 42, die unter dem Verriegelungsbolzen 32 einrastet. Dadurch wird eine sichere Verriegelung gewährleistet. Aus der in Fig. 3 gezeigten ersten Endstellung 33 kann der Tragbügel 28 bis in eine Zwischenstellung 38 bewegt werden, ohne auf das Verriegelungselement 30 zu wirken. Das Verriegelungselement 30 bleibt bei der Verschwenkung des Tragbügels 28 aus der ersten Endstellung 33 in die Zwischenstellung 38 in seiner Verriegelungsstellung. Der Winkel α, um den der Tragbügel 28 gegenüber dem Verriegelungselement 30 verschwenkbar ist, beträgt vorteilhaft mindestens etwa 90°, insbesondere mehr als 110°. Im Ausführungsbeispiel ist der Winkel α größer als 130°. Wie Fig. 5 zeigt, besitzt das Verriegelungselement 30 einen ersten Mitnahmeanschlag 40 und einen zweiten Mitnahmeanschlag 41. In der in Fig. 3 gezeigten ersten Endstellung 33 liegt der Tragbügel 28 am ersten Mitnahmeanschlag 40 an. Der Tragbügel 28 kann gegenüber dem Verriegelungselement 30 verschwenkt werden, bis der Tragbügel 28 am zweiten Mitnahmeanschlag 41 anliegt. Dadurch kann der Tragbügel 28 in die in Fig. 7 gezeigte Tragstellung 39 gestellt werden, in der der Tragbügel 28 senkrecht nach oben ragt, ohne die Verriegelungsvorrichtung 29 zu lösen. Die Zwischenstellung 38 erreicht der Tragbügel 28 erst nach dem Überschwenken der Tragstellung 39.

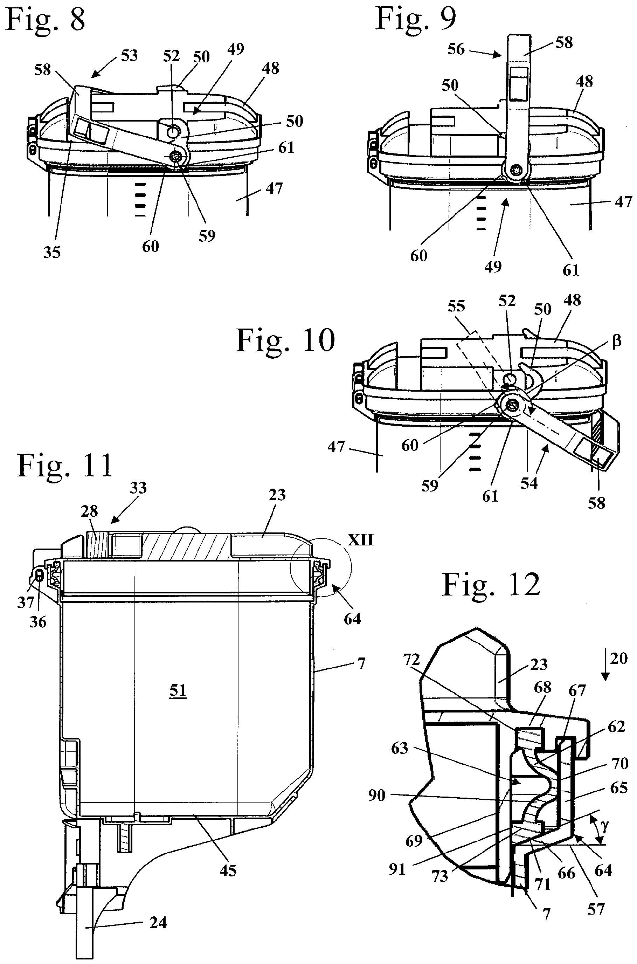

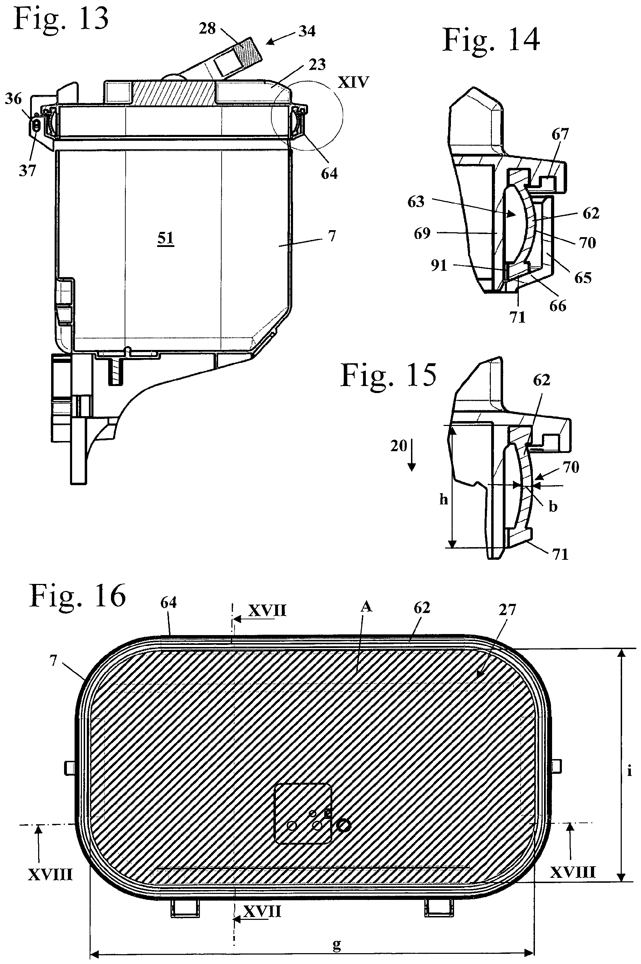

Fig. 6 zeigt den Tragbügel 28 in einer zweiten Endstellung 34. Zum Erreichen dieser Endstellung wurde der Tragbügel 28 aus der Zwischenstellung 38 weiter verschwenkt. Nach dem Überschwenken der Zwischenstellung 38 wirkt der Tragbügel 28 über den zweiten Mitnahmeanschlag 41 (Fig. 5) auf das Verriegelungselement 30 und nimmt das Verriegelungselement 30 mit. Dadurch wird auch das Verriegelungselement 30 verschwenkt. Das Verriegelungselement 30 ist in der zweiten Endstellung 34 aus dem Bereich des Verriegelungsbolzens 32 verschwenkt und nicht mehr in Eingriff mit dem Verriegelungsbolzen 32. Dadurch kann der Deckel 23 in der zweiten Endstellung 34 des Tragbügels 28 von der Einfüllöffnung 27 (Fig. 16) des Behälters 7 weggeschwenkt werden. Wie die Figuren 3 und 6 zeigen, hat sich der Deckel 23 beim Lösen der Verriegelung in Richtung eines Pfeils 44 nach oben, also vom Behälter 7 wegbewegt. Diese Bewegung des Deckels 23 erfolgt aufgrund der Elastizität einer Dichtung 62 (Fig. 12). Alternativ können auch Federelemente vorgesehen sein, um den Deckel 23 nach oben zu bewegen. Die Bewegung des Deckels 23 erfolgt in Richtung der Längsrichtung 88 der Langlöcher 36. Wie die Figuren 6 und 7 zeigen, befindet sich der Lagerbolzen 36 bei geöffneter Verriegelungsvorrichtung 29 am oberen Ende des Langlochs 37 und, wie Fig. 3 und 4 zeigen, bei geschlossener Verriegelungsvorrichtung 29 am unteren Ende des Langlochs 37. Die Begriffe "oben" und "unten" beziehen sich dabei jeweils auf die Wirkrichtung 20 der Schwerkraft in Abstellposition 21 des Sprühgeräts 1. Wird die Verriegelungsvorrichtung 29 geschlossen, so greifen die Verriegelungselemente 30 an den Verriegelungsbolzen 32 ein und bewegen den Deckel 32 entgegen der Richtung des Pfeils 44 nach unten. Auch hier erfolgt die Bewegung als Translationsbewegung in Längsrichtung 88 der Langlöcher 37. Zum Schließen der Verriegelungsvorrichtung 29 wird der Tragbügel 28 aus der in Fig. 7 gezeigten Tragstellung 39 in die in Fig. 3 gezeigte Endstellung 33 verschwenkt. Nachdem der Tragbügel 28 aus der Tragstellung 39 um einen vorgegebenen Verschwenkwinkel verschwenkt wurde, schlägt der Tragbügel 29 am Mitnahmeanschlag 40 (Fig. 5) an und nimmt das Verriegelungselement 30 über den Mitnahmeanschlag 40 mit. Das Verriegelungselement 30 rastet mit seiner Rasterhöhung 42 unter dem Verriegelungsbolzen 32 ein und verriegelt dadurch in der Endstellung 33 den Deckel 23 am Behälter 7. Wie Fig. 6 auch zeigt, besitzt der Deckel 23 eine Vertiefung 35, in der der Tragbügel 28 in der in Fig. 3 gezeigten ersten Endstellung 33 angeordnet ist.

Um den Deckel 28 vom Behälter 7 abzunehmen, kann der Tragbügel 28 in die in Fig. 7 gezeigte Tragstellung 39 verschwenkt werden. Dabei ist der Tragbügel 28 in einem gewissen Winkelbereich unabhängig vom Verriegelungselement 30 verschwenkbar, so dass die Verriegelungsvorrichtung 29 nicht geschlossen wird.

In dem in den Figuren 3 bis 7 gezeigten Ausführungsbeispiel sind der Tragbügel 28 und die Verriegelungselemente 30 am Deckel 23 gelagert, und die Lagerbolzen 32 sind am Behälter 7 fixiert. Die Figuren 8 bis 10 zeigen ein Ausführungsbeispiel eines Behälters 47, an dem ein Deckel 48 angeordnet ist. Der Deckel 48 ist über eine Verriegelungsvorrichtung 49 am Behälter 47 gehalten. Die Verriegelungsvorrichtung 49 umfasst einen Tragbügel 58, der über Mitnahmeanschläge 60 und 61 auf Verriegelungselemente 50 wirkt. Wie Fig. 8 zeigt, sind zwei Verriegelungselemente 50 an gegenüberliegenden Seiten des Deckels 48 vorgesehen. Der Tragbügel 58 und die beiden Verriegelungselemente 50 sind um eine Schwenkachse 59 am Behälter 47 schwenkbar gelagert. Der Deckel 48 besitzt Verriegelungsbolzen 52, an denen die Verriegelungselemente 50 in der in Fig. 8 gezeigten ersten Endstellung 53 des Tragbügels 58 einhaken und so den Deckel 48 am Behälter 47 fixieren. Wie Fig. 8 zeigt, liegt der Tragbügel 58 in seiner ersten Endstellung 53 zumindest teilweise in einer Aufnahme 35 des Deckels 48.

Fig. 9 zeigt den Tragbügel 58 in einer Tragstellung 56. In dieser Stellung ragt der Tragbügel 58 in Abstellposition 21 des Sprühgeräts 1 (Fig. 1) in etwa senkrecht nach oben. Der Tragbügel 58 ist sowohl vom ersten Mitnahmeanschlag 60 als auch vom zweiten Mitnahmeanschlag 61 beabstandet. Die Verriegelungsvorrichtung 49 ist weiterhin geschlossen, wenn der Tragbügel 58 aus der ersten Endstellung 53 in die Tragstellung 56 verschwenkt wurde.

Fig. 10 zeigt den Tragbügel 58 nach weiterem Verschwenken um die Schwenkachse 59. In der in Fig. 10 gezeigten zweiten Endstellung 54 liegt der Tragbügel 58 an einer Seitenwand des Behälters 47 an. Der Tragbügel 58 liegt am zweiten Mitnahmeanschlag 61 an und hat die Verriegelungsvorrichtung 49 über den zweiten Mitnahmeanschlag 61 und die Verriegelungselemente 50 geöffnet. Die Verriegelungselemente 50 sind gegenüber der in den Figuren 8 und 9 gezeigten verriegelten Stellung von den Verriegelungsbolzen 52 weggeschwenkt, so dass der Deckel 48 von der Einfüllöffnung 27 (Fig. 16) weggeschwenkt werden kann. Der Tragbügel 58 kann aus der in Fig. 10 gezeigten zweiten Endstellung 54 bis in eine mit gestrichelter Linie gezeigte Zwischenstellung 55 verschwenkt werden, ohne auf die Verriegelungselemente 50 zu wirken. Der Winkel β, um den der Tragbügel 58 gegenüber den Verriegelungselementen 50 verschwenkt werden kann, beträgt vorteilhaft mindestens etwa 90°, insbesondere mehr als etwa 110°. Im Ausführungsbeispiel beträgt der Winkel β deutlich mehr als 90°, vorzugsweise etwa 130° bis 160°. Dadurch kann der Tragbügel 58 auch bei geöffneter Verriegelungsvorrichtung 49 in die in Fig. 9 gezeigte Tragstellung 56 verstellt werden.

Wie die Figuren 3 bis 7 für das erste Ausführungsbeispiel und die Figuren 8 bis 10 für das zweite Ausführungsbeispiel zeigen, wirkt der Tragbügel 28, 58 im Schwenkweg von der ersten Endstellung 33, 53 in die zweite Endstellung 34, 54 erst nach dem Überschwenken der Tragstellung 39, 56 auf das Verriegelungselement 30, 50. Auch beim Schwenkweg von der zweiten Endstellung 34, 54 in die erste Endstellung 33, 53 wirkt der Tragbügel 28, 58 erst nach dem Überschwenken der Tragstellung 39, 56 auf das Verriegelungselement 30, 50. Dadurch kann der Tragbügel 28, 58 sowohl bei geöffneter Verriegelungsvorrichtung 29, 49 als auch bei geschlossener Verriegelungsvorrichtung 29, 49 in die Tragstellung 39, 56 gestellt werden.

Die Figuren 11 bis 15 zeigen die Gestaltung der Abdichtung des Deckels 23 gegenüber dem Behälter 7 im Einzelnen. Eine entsprechende Abdichtung kann für den Behälter 47 und den Deckel 48 vorgesehen sein. Wie Fig. 11 zeigt, besitzt der Behälter 7 einen Rand 64, der sich in Abstellposition 21 vom Behälterinnenraum 51 nach außen und oben erstreckt. Der Behälterinnenraum 51 wird in Abstellposition 21 nach unten von einem Boden 45 des Behälters 7 begrenzt. Wie Fig. 12 zeigt, begrenzt der Rand 64 einen Aufnahmeraum 63 für eine Dichtung 62. Im Ausführungsbeispiel ist die Dichtung 62 in einer Nut 68 am Deckel 23 gehalten. Wird der Deckel 23 abgenommen, so wird auch die Dichtung 62 abgenommen. Der Rand 64 besitzt einen Boden 66, der in Richtung zum Behälterinnenraum 51 hin abfällt. Der Boden 66 ist gegenüber einer Horizontalen 57 um einen Winkel γ geneigt. Der Winkel γ beträgt vorteilhaft mehr als etwa 5°, insbesondere mehr als etwa 15°. Der Winkel γ stellt sicher, dass Sprühmittel, das beim Einfüllen an den Boden 66 des Rands 64 gelangt, in den Behälterinnenraum 51 abfließen oder hinunterrieseln kann. Die Horizontale 57 ist in Abstellposition 21 horizontal, also parallel zur Abstellfläche 22 angeordnet.

An den Boden 66 schließt sich eine Wand 65 an, die den Aufnahmeraum 63 radial nach außen, also auf die dem Behälterinnenraum 51 abgewandte Seite begrenzt. Die Wand 65 ist im Ausführungsbeispiel in etwa senkrecht, also näherungsweise parallel zur Wirkrichtung 20 der Schwerkraft in Abstellposition 21 (Fig. 2) ausgerichtet. Für eine Herstellung des Behälters 7 im Spritzguss ist eine geringfügige Neigung der Wand 65 vorgesehen, um die Entformung des Behälters 7 zu ermöglichen. Die Wand 65 ist mit ihrem nach oben ragenden Rand bei verriegelter Verriegelungsvorrichtung 29 in einer Nut 67 des Deckels 23 angeordnet, die radial außerhalb der Nut 68 liegt. Der Aufnahmeraum 63 ist zum Behälterinnenraum 51 hin von einem Rand 69 des Deckels 23 begrenzt, der ebenfalls umlaufend und etwa in Wirkrichtung 20 der Schwerkraft, also etwa senkrecht verläuft. Die Dichtung 62 besitzt einen Halteabschnitt 72, der in der Nut 68 des Deckels 23 angeordnet ist. Die Dichtung 62 besitzt außerdem einen unteren Dichtabschnitt 73, der am Boden 66 des Aufnahmeraums 63 anliegt und an dem eine axiale Dichtfläche 71 ausgebildet ist. Die axiale Dichtfläche 71 wirkt mindestens teilweise in Wirkrichtung 20 der Schwerkraft. Zwischen dem Halteabschnitt 71 und dem unteren Dichtabschnitt 73 erstreckt sich ein Mittelabschnitt 90 der Dichtung 62, in dem die Dichtung 62 eine gleichmäßige, geringe Dicke besitzt. Der Halteabschnitt 71 und der untere Dichtabschnitt 73 sind gegenüber dem Mittelabschnitt 90 verdickt ausgebildet. Der Mittelabschnitt 90 besitzt eine radiale Dichtfläche 70, die bei geschlossener Verriegelungsvorrichtung 29 an der Wand 65 anliegt und den Behälterinnenraum 51 in einer Richtung senkrecht zur Wirkrichtung 20 der Schwerkraft abdichtet. Im Ausführungsbeispiel besitzt die Dichtung 62 eine zweite radiale Dichtfläche 91, die an dem unteren Dichtabschnitt 73 ausgebildet ist und die radial nach innen, also in Richtung auf den Behälterinnenraum 51 wirkt und am Rand 69 des Deckels 23 anliegt.

Fig. 13 zeigt den Behälter 7 und den daran angeordneten Deckel in der zweiten Endstellung 34 des Tragbügels 28. Wie die vergrößerte Darstellung in Fig. 14 zeigt, liegt die axiale Dichtfläche 71 am Boden 66 des Aufnahmeraums 63 an. Die radiale Dichtfläche 70 besitzt einen Abstand zur Wand 65, so dass in radialer Richtung noch keine Abdichtung erfolgt. Die Wand 65 ist nicht in der Nut 67 angeordnet, sondern besitzt zu dieser einen Abstand.

Fig. 15 zeigt die Dichtung 62 bei abgenommenem Deckel 23. Die Dichtung 62 besitzt in diesem unbelasteten Zustand eine in Wirkrichtung 20 der Schwerkraft gemessene Höhe h. An der radialen Dichtfläche 70 besitzt die Dichtung 62 eine Breite b. Die Höhe h ist deutlich größer als die Breite b. Die Breite b beträgt vorteilhaft weniger als etwa 40%, insbesondere weniger als etwa 25% der Gesamthöhe h der Dichtung 62 in unbelastetem Zustand. Die Höhe h beträgt in unbelastetem Zustand vorzugsweise mindestens etwa 2,0 cm, insbesondere mindestens etwa 3,0 cm. Wie Fig. 15 zeigt, ist die Dichtung 62 auch in unbelastetem Zustand nach außen gewölbt, um sicherzustellen, dass die Dichtung 62 sich bei Belastung nicht nach innen wölbt, sondern sich an der Wand 65 (Fig. 14) anlegen kann. Wie auch Fig. 16 zeigt, ist die Dichtung 62 als umlaufendes Dichtband ausgebildet, das am Rand 64 umlaufend angeordnet ist.

Beim Aufsetzen des Deckels 23 auf den Behälter 7 legt sich die axiale Dichtfläche 71 am Boden 66 des Rands 64 an. Wird die Verriegelungsvorrichtung geschlossen, der Tragbügel 28 also beispielsweise aus der in Fig. 13 gezeigten zweiten Endstellung 34 in die in Fig. 11 gezeigte erste Endstellung 33 verschwenkt, so schließt sich die Verriegelungsvorrichtung 29 (Fig. 3). Dabei bewegt sich der Deckel 23 gegenüber dem Behälter 7 in Längsrichtung 88 der Langlöcher 37 (Fig. 4), und die Lagerbolzen 36 bewegen sich in den Langlöchern 37 aus der in Fig. 13 gezeigten, oberen Stellung in die in Fig. 11 gezeigte, untere Stellung. Aufgrund der Translationsbewegung des Deckels 23 senkrecht zur Längsrichtung der Dichtung 62 wird die Dichtung 62 zusammengedrückt. Dabei verformt sich die Dichtung 62 in ihrem Mittelabschnitt 90, und die radiale Dichtfläche 70 wird an die Wand 65 gepresst. Gleichzeitig werden die axiale Dichtfläche 71 gegen den Boden 66 und die zweite radiale Dichtfläche 91 gegen den Rand 69 gepresst. Dadurch wird eine sichere Abdichtung erreicht. Vorteilhaft ist die Dichtung 62 so ausgebildet, dass die axiale Dichtfläche 71 beim Aufsetzen des Deckels 23 und beim Verschließen der Verriegelungsvorrichtung 29 Sprühmittel, das am Boden 66 des Aufnahmeraums 63 angeordnet ist, in den Behälterinnenraum 51 schiebt.

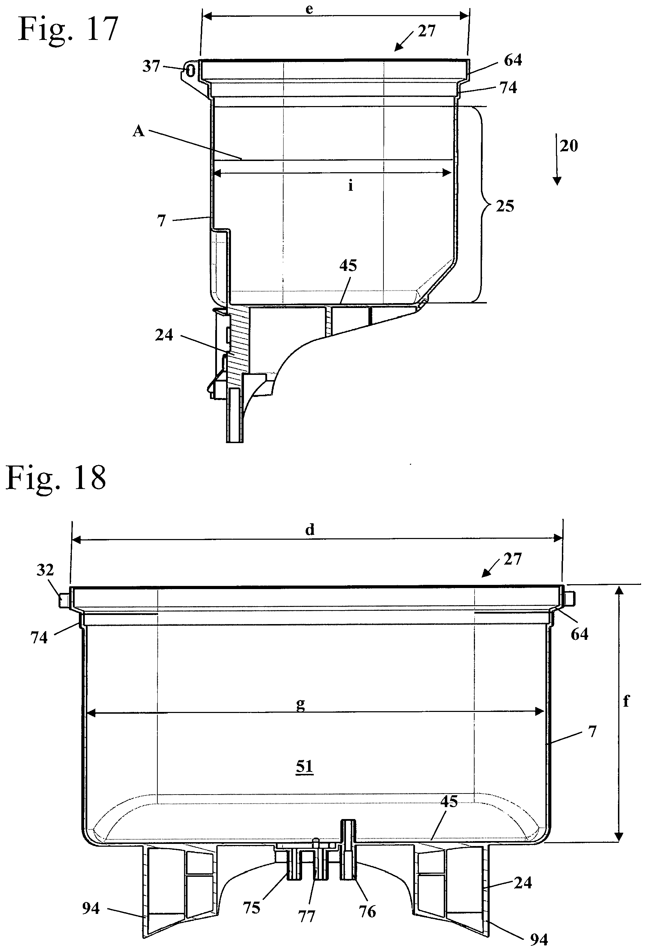

Fig. 16 zeigt die Einfüllöffnung 27. Die Einfüllöffnung 27 erstreckt sich über den gesamten Innenquerschnitt des Behälters 7. Der Behälter 7 besitzt eine größte Innenquerschnittsfläche A, die auch in Fig. 17 gezeigt ist. In Fig. 16 ist die Innenquerschnittsfläche A schraffiert eingezeichnet. Die größte Innenquerschnittsfläche A ist der größte horizontale Querschnitt des Behälters 7 im Sprühmittelbereich 25, wenn sich das Sprühgerät 1 in Abstellposition 21 (Fig. 2) befindet. Vorteilhaft ist der Behälter 7 an der Einfüllöffnung über mindestens 60% der Innenquerschnittsfläche A zu öffnen. Besonders vorteilhaft ist der Behälter an der Einfüllöffnung über mindestens 90% seiner größten Innenquerschnittsfläche A zu öffnen. Im Ausführungsbeispiel ist der Behälter an der Einfüllöffnung über seine gesamte größte Innenquerschnittsfläche A zu öffnen. Zusätzlich ist auch der Bereich des Rands 64 vollständig nach oben offen. Dadurch ist der Behälterinnenraum 51 (Fig. 13) für den Benutzer leicht zugänglich und das Einfüllen von Sprühmittel und die Reinigung des Behälters 7 sind vereinfacht.

Im Ausführungsbeispiel besitzt der Behälter 7 einen abgerundeten Rechteckquerschnitt. Der Behälter 7 besitzt eine senkrecht zur Ebene der Rückenplatte 86 (Fig. 2) gemessene Tiefe i, die deutlich kleiner als eine parallel zur Ebene der Rückenplatte 86 gemessenen Breite g des Behälters 7 ist. Die Tiefe i und die Breite g sind dabei an der größten Innenquerschnittsfläche A, also im Sprühmittelbereich 25 gemessen, wie auch die Figuren 17 und 18 zeigen. Die Tiefe i beträgt vorteilhaft von etwa 30% bis etwa 70%, insbesondere von etwa 40% bis etwa 60% der Breite g.

Wie Fig. 17 zeigt, besitzt der Behälter 7 an der dem Boden 45 des Behälters 7 zugewandten Seite einen Ringabsatz 74, in dem der Außenumfang des Behälters 7 vergrößert ist. Wie Fig. 17 zeigt, vergrößert sich die Tiefe des Behälters 7 vom Boden 45 in Richtung auf die Einfüllöffnung 27, so dass der Behälter 7 keine Hinterschnitte besitzt. Wie Fig. 18 zeigt, vergrößert sich auch die Breite g vom Boden 45 in Richtung auf die Einfüllöffnung 27, so dass sich auch hier keine Hinterschnitte ergeben.

Der Behälter 7 ist als Spritzgussteil, insbesondere aus Kunststoff, ausgebildet. Am Behälter 7 ist der Träger 24 einteilig angeformt. Wie Fig. 17 zeigt, ist der Träger 24 am Boden 45 des Behälters 7 angeordnet. Der Träger 24 besitzt zwei Arme 94, die jeweils eine Vielzahl von Versteifungsrippen aufweisen. Die beiden Arme 94 sind beidseitig von Anschlussstutzen 75, 76 und 77 des Behälters 7 angeordnet. Die Arme 94 können in Aufnahmen der Rückentrage 2 eingesteckt werden, um den Behälter 7 an der Rückentrage 2 zu fixieren. In Fig. 18 sind auch am Behälter 7 angeformte Anschlussstutzen 75 bis 77 gezeigt. Der Anschlussstutzen 75 ist zum Anschluss der Sprühmittelleitung 8 oder einer Zuleitung zu einer Druckpumpe vorgesehen. Ein weiterer Anschlussstutzen 76 ist zum Anschluss einer Belüftungsleitung vorgesehen und ein dritter Anschlussstutzen 77 zum Anschluss einer Rückleitung für die Druckpumpe. Bei Betrieb ohne Druckpumpe ist der Anschlussstutzen 77 zu verschließen.

Wie die Figuren 17 und 18 zeigen, ist der Behälter 7 näherungsweise quaderförmig mit abgerundeten Kanten und Ecken ausgebildet. Der Behälter 7 besitzt eine Höhe f, die vom Boden 45 bis zur Einfüllöffnung 27 gemessen ist. Der Träger 24 und die aus dem Behälter 7 ragenden Anschlussstutzen 75 und 77 sind dabei nicht mitgemessen. Der Behälter 7 besitzt die Breite d, die an der Einfüllöffnung 27 gemessen ist. Die Verriegelungsbolzen 32 sind dabei nicht mitgemessen. Wie Fig. 17 zeigt, besitzt der Behälter 7 eine Tiefe e. Bei der Tiefe e sind die Elemente des Schwenklagers 31 nicht mitgemessen. Die Breite g, Höhe f und Tiefe e des Behälters 7 ist in den Bereichen des Behälters 7 gemessen, die den Behälterinnenraum 51 begrenzen. Die Höhe f und die Tiefe e können etwa gleich groß sein. Die Höhe f beträgt vorteilhaft etwa 75% bis etwa 125% der Tiefe e. Die Breite d ist deutlich größer als die Tiefe e und die Höhe f. Die Höhe f und die Tiefe e können vorteilhaft etwa 40% bis etwa 70% der Breite d betragen.

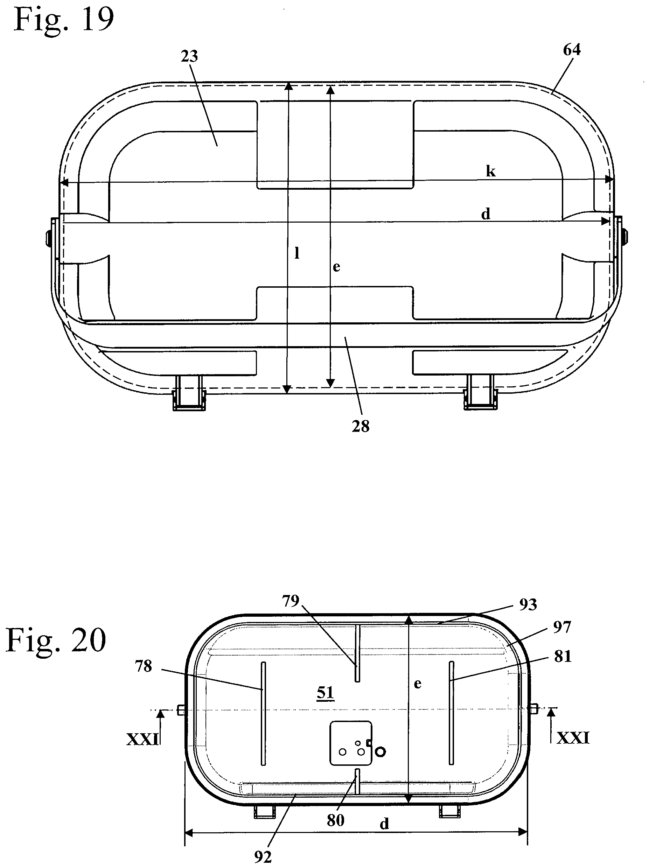

Fig. 19 zeigt den Deckel 23 von oben. Der Verlauf des Rands 64 ist mit gestrichelter Linie eingezeichnet. Der Deckel 23 besitzt wie auch der Behälter 7 einen abgerundeten Rechteckquerschnitt. Wie Fig. 17 zeigt, erstreckt sich der Deckel 23 an jeder Stelle über den Rand 64 hinaus. Wird der Deckel 23 abgenommen, ist der Behälter 7 über seinen gesamten Innenquerschnitt einschließlich des Bereichs des Rands 64 nach oben offen. Die Außenkontur des Deckels 23 entspricht dabei der Form des Behälterquerschnitts am Rand 64. Der Deckel 23 besitzt eine parallel zur Breite d des Behälters 7 gemessene Breite k, die geringfügig größer als die Breite d des Behälters 7 ist. Die parallel zur Tiefe e gemessene Tiefe 1 des Deckels 23 ist ebenfalls geringfügig größer als die Tiefe e des Behälters 7.

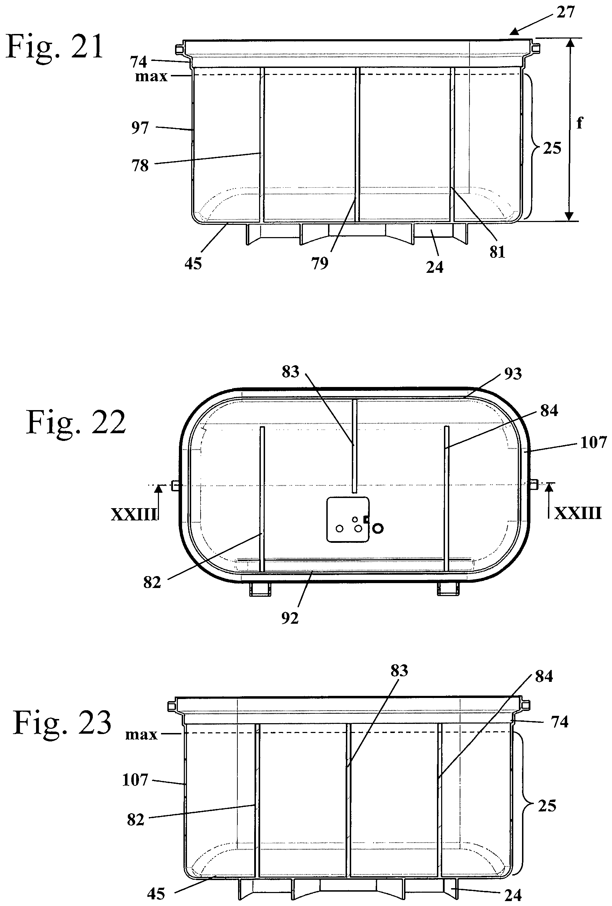

Die Figuren 20 und 21 zeigen ein Ausführungsbeispiel eines Behälters 97. Um eine übermäßige Bewegung des Sprühmittels im Behälter 97, insbesondere bei flüssigem Sprühmittel, zu vermeiden, besitzt der Behälter 97 Schwallwände 78, 79, 80 und 81. Die Schwallwände 78 bis 81 erstrecken sich vom Boden 45 vorteilhaft bis mindestens zur maximal zulässigen Füllhöhe max. Im Ausführungsbeispiel erstrecken sich die Schwallwände 78 bis 81 bis zur Unterkante des Ringabsatzes 74. Wie Fig. 20 zeigt, erstrecken sich die Schwallwände 78 bis 81 jeweils nur über einen Teilbereich der Tiefe e des Behälters 97 an der Einfüllöffnung 27. Die Schwallwände 78 und 81 erstrecken sich in einem mittleren Bereich der Tiefe e des Behälters 97. Die Schwallwände 79 und 80 sind in einem mittleren Bereich der Breite d in einer Ebene angeordnet und besitzen einen Abstand zueinander. Die Schwallwand 79 grenzt an eine Vorderwand 93 des Behälters 97 an und die Schwallwand 80 an einer Rückwand 92. Die Rückwand 92 ist dabei die der Rückentrage 2 zugewandte Wand des Behälters 97 und die Vorderwand 93 die der Rückentrage 2 abgewandte Wand.

Ein weiteres Ausführungsbeispiel für Schwallwände 82 bis 84 eines Behälters 107 ist in den Figuren 22 und 23 gezeigt. Es sind zwei äußere Schwallwände 82 und 84 vorgesehen, die sich von der Rückwand 92 über einen Großteil der Tiefe e des Behälters 107 erstrecken. Eine mittlere Schwallwand 83 erstreckt sich von der Vorderwand 93 über einen Großteil der Tiefe e. Die Schwallwand 83 besitzt zur Rückwand 92 einen Abstand, und die Schwallwände 82 und 84 besitzen zur Vorderwand 93 einen Abstand. Wie Fig. 23 zeigt, erstrecken sich die Schwallwände 82, 83 und 84 vom Boden 45 über die maximale Füllhöhe max hinaus bis zur Unterkante des Ringabsatzes 74. Auch eine andere Anzahl und/oder Anordnung von Schwallwänden kann vorteilhaft sein.

In allen Figuren bezeichnen gleiche Bezugszeichen einander entsprechende Elemente. Die Behälter 47, 97 und 107 sind in den nicht im Einzelnen beschriebenen Merkmalen entsprechend dem Behälter 7 ausgebildet.

## Patentansprüche

1. Behälter für Sprühmittel für ein rückengetragenes Sprühgerät, wobei der Behälter (7, 47, 97, 107) eine Einfüllöffnung (27) besitzt, die mit einem Deckel (23, 48) verschließbar ist, wobei der Behälter (7, 47, 97, 107) einen für Sprühmittel vorgesehenen Sprühmittelbereich (25) besitzt, der sich bis zu einer maximal zulässigen Füllhöhe (max) erstreckt, und wobei der Sprühmittelbereich (25) in einer Abstellposition (21) des Sprühgeräts (1) eine größte, horizontale Innenquerschnittsfläche (A) besitzt,
**dadurch gekennzeichnet, dass** der Behälter (7, 47, 97, 107) an der Einfüllöffnung (27) über mindestens 60% seiner größten Innenquerschnittsfläche (A) zu öffnen ist, dass zwischen dem Deckel (23, 48) und dem Behälter (7, 47, 97, 107) eine Dichtung (62) wirkt, die bei geschlossenem Deckel (23, 48) in einem zwischen Deckel (23, 48) und Behälter (7, 47, 97, 107) gebildeten Aufnahmeraum (63) angeordnet ist, dass die Dichtung (62) am Deckel (23, 48) gehalten ist, und dass die Dichtung (62) sich mit einer axialen Dichtfläche (71) an einem umlaufenden Rand (64) des Behälters (7, 47, 97, 107) abstützt, der bis zum Behälterinnenraum (51) abfällt.

2. Rückengetragenes Sprühgerät, an dem ein Behälter (7, 47, 97, 107) für Sprühmittel nach Anspruch 1 angeordnet ist, wobei das Sprühgerät (1) eine Abstellposition (21) besitzt, in der das Sprühgerät (1) auf einer ebenen, horizontalen Abstellfläche (22) abgestellt ist.

3. Sprühgerät nach Anspruch 2,
**dadurch gekennzeichnet, dass** der Behälter (7, 47, 97, 107) an der Einfüllöffnung (27) über seine gesamte größte Innenquerschnittsfläche (A) zu öffnen ist.

4. Sprühgerät nach Anspruch 2 oder 3,
**dadurch gekennzeichnet, dass** die Einfüllöffnung (27) einen unrunden Querschnitt aufweist.

5. Sprühgerät nach einem der Ansprüche 2 bis 4,
**dadurch gekennzeichnet, dass** das Sprühgerät (1) eine Verriegelungsvorrichtung (29, 49) zur Fixierung des Deckels (27, 48) an dem Behälter (7, 47, 97, 107) besitzt, wobei die Verriegelungsvorrichtung (29, 49) ein schwenkbar gelagertes Verriegelungselement (30, 50) und ein Betätigungselement umfasst, wobei das Verriegelungselement (30, 50) die Verriegelung bewirkt, und wobei die Verriegelungsvorrichtung (29, 49) durch Verschwenken des Betätigungselements zu lösen und zu verriegeln ist.

6. Sprühgerät nach Anspruch 5,
**dadurch gekennzeichnet, dass** das Betätigungselement gegenüber dem Verriegelungselement (30, 50) verschwenkbar ist.

7. Sprühgerät nach Anspruch 5 oder 6,
**dadurch gekennzeichnet, dass** das Betätigungselement eine erste Endstellung (33, 53) aufweist, in der die Verriegelungsvorrichtung (29, 49) geschlossen ist und eine zweite Endstellung (34, 54), in der die Verriegelungsvorrichtung (29, 49) offen ist.

8. Sprühgerät nach Anspruch 7,
**dadurch gekennzeichnet, dass** das Sprühgerät (1) einen schwenkbar gelagerten Tragbügel (28, 58) umfasst, der das Betätigungselement bildet, und dass der Tragbügel (28, 58) eine Tragstellung (39, 56) aufweist, die im Schwenkweg zwischen der ersten Endstellung (33, 53) und der zweiten Endstellung (34, 54) liegt.

9. Sprühgerät nach Anspruch 8,
**dadurch gekennzeichnet, dass** der Tragbügel (28, 58) im Schwenkweg von einer Endstellung (33, 34, 53, 54) in die andere Endstellung (33, 34, 53, 54) erst nach dem Überschwenken der Tragstellung (39, 56) auf das Verriegelungselement (30, 50) wirkt, und dass vorteilhaft der Tragbügel (28, 58) in der ersten Endstellung (33, 53) mindestens teilweise in einer Vertiefung (35) des Deckels (23, 48) liegt.

10. Sprühgerät nach einem der Ansprüche 2 bis 9,
**dadurch gekennzeichnet, dass** der Deckel (23, 48) mit mindestens einem Schwenklager (31) schwenkbar am Behälter (7, 47, 97, 107) gelagert ist, wobei das Schwenklager (31) eine Translationsbewegung des Deckels (23, 48) senkrecht zur Einfüllöffnung (27) zulässt.

11. Sprühgerät nach einem der Ansprüche 2 bis 10,
**dadurch gekennzeichnet, dass** die Verriegelungsvorrichtung (30, 50) den Deckel (23, 48) beim Schließen der Verriegelungsvorrichtung (30, 50) mit einer Translationsbewegung senkrecht zur Ebene der Einfüllöffnung (27) bewegt.

12. Sprühgerät nach einem der Ansprüche 2 bis 11,
**dadurch gekennzeichnet, dass** die Translationsbewegung des Deckels (23, 48) senkrecht zur Einfüllöffnung (27) beim Schließen der Verriegelungsvorrichtung (30, 50) eine Anlage mindestens einer Dichtfläche (70, 71) der Dichtung (62) an dem Behälter (7, 47, 97, 107) bewirkt.

13. Sprühgerät nach einem der Ansprüche 2 bis 12,
**dadurch gekennzeichnet, dass** die Dichtung (62) sich in geschlossenem Zustand des Deckels (23, 48) mit einer radialen Dichtfläche (70) an einer den Aufnahmeraum (63) zur Außenseite des Behälters (7, 47, 97, 107) hin begrenzenden Wand (65) des Behälters (7, 47, 97, 107) abstützt.

14. Sprühgerät nach Anspruch 13,
**dadurch gekennzeichnet, , dass** die Breite (b) der Dichtung (62) an der radialen Dichtfläche (70) weniger als etwa 40% der Gesamthöhe (h) der Dichtung (62) in unbelastetem Zustand beträgt.

15. Sprühgerät nach einem der Ansprüche 2 bis 14,
**dadurch gekennzeichnet, dass** der Deckel (23, 48) einen Rand (69) besitzt, der den Aufnahmeraum (63) für die Dichtung (62) zum Behälterinnenraum (51) hin begrenzt.

16. Sprühgerät nach Anspruch 15,
**dadurch gekennzeichnet, dass** die Dichtung (62) eine zweite radiale Dichtfläche (91) besitzt, die an einem unteren Dichtabschnitt (73) der Dichtung (62) ausgebildet ist und die radial nach innen, also in Richtung auf den Behälterinnenraum (51) wirkt und am Rand (69) des Deckels (23) anliegt.

17. Sprühgerät nach einem der Ansprüche 2 bis 16,
**dadurch gekennzeichnet, dass** die Dichtung (62) als umlaufendes Dichtband ausgebildet ist, dessen Höhe (h) in unbelastetem Zustand mindestens etwa 2 cm, vorzugsweise mindestens etwa 3 cm beträgt.

18. Sprühgerät nach einem der Ansprüche 2 bis 17,
**dadurch gekennzeichnet, dass** das Sprühgerät (1) eine Traganordnung besitzt, und dass an dem Behälter (7, 47, 97, 107) eine Befestigungsanordnung zur Fixierung an einer Rückentrage (2) der Traganordnung angeformt ist, und dass der Behälter (7, 47, 97, 107) vorteilhaft ein Spritzgussteil ist.

## Claims

1. Container for spray for a back-mounted sprayer, wherein the container (7, 47, 97, 107) has a filling hole (27), which can be closed by a cover (23, 48), wherein the container (7, 47, 97, 107) has a spray region (25) provided for spray, which extends to a maximum permissible fill level (max), and wherein the spray region (25) has a largest horizontal internal cross-section area (A) in a parking position (21) of the sprayer (1),
**characterised in that** the container (7, 47, 97, 107) can be opened across at least 60% of its largest internal cross-section area (A) at the filling hole (27), **in that** a seal (62), which, if the cover (23, 48) is closed, is located in a reception space (63) formed between the cover (23, 48) and the container (7, 47, 97, 107), acts between the cover (23, 48) and the container (7, 47, 97, 107), and **in that** the seal (62) is supported with an axial sealing face (71) on a continuous edge (64) of the container (7, 47, 97, 107), which edge drops towards the container interior (51).

2. Back-mounted sprayer, on which a container (7, 47, 97, 107) for spray according to claim 1 is located, the sprayer (1) having a parking position (21), in which the sprayer (1) is parked on a level horizontal parking surface (22).

3. Sprayer according to claim 2,
**characterised in that** the container (7, 47, 97, 107) can be opened across its entire largest internal cross-section area (A) at the filling hole (27).

4. Sprayer according to claim 2 or 3,
**characterised in that** the filling hole (27) has a non-circular cross-section.

5. Sprayer according to any of claims 2 to 4,
**characterised in that** the sprayer (1) has a locking device (29, 49) for locating the cover (27, 48) on the container (7, 47, 97, 107), wherein the locking device (29, 49) comprises a pivotably mounted locking element (30, 50) and an operating element, wherein the locking element (30, 50) provides the locking action, and wherein the locking device (29, 49) can be released and locked by pivoting the operating element.

6. Sprayer according to claim 5,
**characterised in that** the operating element is pivotable relative to the locking element (30, 50).

7. Sprayer according to claim 5 or 6,
**characterised in that** the operating element has a first end position (33, 53), in which the locking device (29, 49) is closed, and a second end position (34, 54), in which the locking device (29, 49) is open.

8. Sprayer according to claim 7,
**characterised in that** the sprayer (1) comprises a pivotably mounted carrying handle (28, 58), which forms the operating element, and **in that** the carrying handle (28, 58) has a carrying position (39, 56), which lies in the pivoting path between the first end position (33, 53) and the second end position (34, 54).

9. Sprayer according to claim 8,
**characterised in that**, in the pivoting path from one end position (33, 34, 53, 54) to the other end position (33, 34, 53, 54), the carrying handle (28, 58) only acts on the locking element (30, 50) after passing the carrying position (39, 56), and **in that** the carrying handle (28, 58) advantageously lies at least partially in a recess (35) of the cover (23, 48) in the first end position (33, 53).

10. Sprayer according to any of claims 2 to 9,
**characterised in that** the cover (23, 48) is pivotably mounted on the container (7, 47, 97, 107) via at least one pivot bearing (31), the pivot bearing allowing a translational movement of the cover (23, 48) at right angles to the filling hole (27).

11. Sprayer according to any of claims 2 to 10,
**characterised in that** the locking device (30, 50) moves the cover (23, 48) in a translational movement at right angles to the plane of the filling hole (27) in the closing process of the locking device (30, 50).

12. Sprayer according to any of claims 2 to 11,
**characterised in that** the translational movement of the cover (23, 48) at right angles to the filling hole (27) in the closing process of the locking device (30, 50) causes at least one sealing face (70, 71) of the seal (62) to bear against the container (7, 47, 97, 107).

13. Sprayer according to any of claims 2 to 12,
**characterised in that**, in the closed state of the cover (23, 48), the seal (62) is supported on a wall (65) of the container (7, 47, 97, 107), which bounds the reception space (63) towards the outside of the container (7, 47, 97, 107), with a radial sealing face (70).

14. Sprayer according to claim 13,
**characterised in that** the width (b) of the seal (62) at the radial sealing face (70) is less than approximately 40% of the overall height (h) of the seal (62) in the unloaded state.

15. Sprayer according to any of claims 2 to 14,
**characterised in that** the cover (23, 48) has an edge (69), which bounds the reception space (63) for the seal (62) towards the container interior (51).

16. Sprayer according to claim 15,
**characterised in that** the seal (62) has a second radial sealing face (91), which is formed at a bottom seal section (73) of the seal (62) and acts in a radially inward direction, i.e. towards the container interior (51), and bears against the edge (69) of the cover (23).

17. Sprayer according to any of claims 2 to 16,
**characterised in that** the seal (62) is designed as a continuous sealing tape with a height (h) of at least approximately 2 cm, preferably of at least approximately 3 cm, in the unloaded state.

18. Sprayer according to any of claims 2 to 17,
**characterised in that** the sprayer (1) has a carrying assembly, and **in that** a mounting arrangement for location on a back carrier (2) of the carrying assembly is integrally formed on the container (7, 47, 97, 107), and **in that** the container (7, 47, 97, 107) advantageously is an injection-moulded part.

## Revendications

1. Récipient pour agent à pulvériser pour un pulvérisateur porté sur le dos, le récipient (7, 47, 97, 107) présentant une ouverture de remplissage (27) qui est apte à être fermée par un couvercle (23, 48), le récipient (7, 47, 97, 107) comportant une zone d'agent à pulvériser (25), prévue pour l'agent à pulvériser, qui s'étend jusqu'à un niveau de remplissage maximal autorisé (max), et la zone d'agent à pulvériser (25) présentant, dans une position d'entreposage (21) du pulvérisateur (1), une surface de section transversale intérieure horizontale maximale (A),
**caractérisé en ce que** le récipient (7, 47, 97, 107) peut s'ouvrir au niveau de l'ouverture de remplissage (27) sur au moins 60 % de sa surface de section transversale intérieure maximale (A), **en ce qu'**entre le couvercle (23, 48) et le récipient (7, 47, 97, 107) agit un joint d'étanchéité (62) qui, quand le couvercle (23, 48) est fermé, est disposé dans un logement (63) formé entre le couvercle (23, 48) et le récipient (7, 47, 97, 107), **en ce que** le joint d'étanchéité (62) est fixé au couvercle (23, 48), et **en ce que** le joint d'étanchéité (62) s'appuie avec une surface d'étanchéité axiale (71) contre un bord périphérique (64) du récipient (7, 47, 97, 107), qui va en descendant jusqu'à l'intérieur (51) dudit récipient.

2. Pulvérisateur porté sur le dos, sur lequel est disposé un récipient (7, 47, 97, 107) pour agent à pulvériser selon la revendication 1, le pulvérisateur (1) ayant une position d'entreposage (21) dans laquelle il est posé sur un surface d'entreposage horizontale plane (22).

3. Pulvérisateur selon la revendication 2,
**caractérisé en ce que** le récipient (7, 47, 97, 107) peut s'ouvrir au niveau de l'ouverture de remplissage (27) sur toute sa surface de section transversale intérieure maximale (A).

4. Pulvérisateur selon la revendication 2 ou 3,
**caractérisé en ce que** l'ouverture de remplissage (27) présente une section transversale non circulaire.

5. Pulvérisateur selon l'une des revendications 2 à 4,
**caractérisé en ce que** le pulvérisateur (1) comporte un dispositif de verrouillage (29, 49) pour la fixation du couvercle (27, 48) au récipient (7, 47, 97, 107), le dispositif de verrouillage (29, 40) comprenant un élément de verrouillage (30, 50) monté pivotant, et un élément d'actionnement, l'élément de verrouillage (30, 50) provoquant le verrouillage, et le dispositif de verrouillage (29, 40) pouvant être débloqué et verrouillé grâce au pivotement de l'élément d'actionnement.

6. Pulvérisateur selon la revendication 5,
**caractérisé en ce que** l'élément d'actionnement est apte à pivoter par rapport à l'élément de verrouillage (30, 50).

7. Pulvérisateur selon la revendication 5 ou 6,
**caractérisé en ce que** l'élément d'actionnement présente une première position de fin de course (33, 53), dans laquelle le dispositif de verrouillage (29, 40) est fermé, et une seconde position de fin de course (34, 54), dans laquelle le dispositif de verrouillage (29, 40) est ouvert.

8. Pulvérisateur selon la revendication 7,
**caractérisé en ce que** le pulvérisateur (1) comprend une anse (28, 58) qui forme l'élément d'actionnement, et **en ce que** l'anse (28, 58) présente une position de portage (39, 56) qui se trouve sur la course de pivotement entre la première position de fin de course (33, 53) et la seconde position de fin de course (34, 54).

9. Pulvérisateur selon la revendication 8,
**caractérisé en ce que** l'anse (28, 58), sur la course de pivotement d'une position de fin de course (33, 34, 53, 54) jusqu'à l'autre position de fin de course (33, 34, 53, 54), n'agit sur l'élément de verrouillage (30, 50) qu'après avoir dépassé la position de portage (39, 56), et **en ce que** l'anse (28, 58), dans la première position de fin de course (33, 53), se trouve au moins en partie dans un creux (35) du couvercle (23, 48).

10. Pulvérisateur selon l'une des revendications 2 à 9,
**caractérisé en ce que** le couvercle (23, 48) est monté pivotant sur le récipient (7, 47, 97, 107) avec au moins un palier de pivotement (31), le palier de pivotement (21) autorisant un mouvement de translation du couvercle (23, 48) perpendiculaire à l'ouverture de remplissage (27).

11. Pulvérisateur selon l'une des revendications 2 à 10,
**caractérisé en ce que** le dispositif de verrouillage (30, 50) déplace le couvercle (23, 48), lors de la fermeture dudit dispositif de verrouillage (30, 50), avec un mouvement de translation perpendiculaire au plan de l'ouverture de remplissage (27).

12. Pulvérisateur selon l'une des revendications 2 à 11,
**caractérisé en ce que** le mouvement de translation du couvercle (23, 48) perpendiculaire à l'ouverture de remplissage (27) provoque, lors de la fermeture du dispositif de verrouillage (30, 50), une application d'au moins une surface d'étanchéité (70, 71) du joint d'étanchéité (62) contre le récipient (7, 47, 97, 107)

13. Pulvérisateur selon l'une des revendications 2 à 12,
**caractérisé en ce que** le joint d'étanchéité (62), dans la position fermée du couvercle (23, 48), s'appuie avec une surface d'étanchéité radiale (70) contre une paroi (65) du récipient (7, 47, 97, 107) qui délimite le logement (63) en direction du côté extérieur dudit récipient (7, 47, 97, 107).

14. Pulvérisateur selon la revendication 13,
**caractérisé en ce que** la largeur (b) du joint d'étanchéité (62) au niveau de la surface d'étanchéité radiale (70) représente moins de 40 %, environ, de la hauteur totale (h) du joint d'étanchéité (62) à l'état non contraint.

15. Pulvérisateur selon l'une des revendications 2 à 14,
**caractérisé en ce que** le couvercle (23, 48) présente un bord (69) qui délimite le logement (63) pour le joint d'étanchéité (62) en direction de l'intérieur (51) du récipient.

16. Pulvérisateur selon la revendication 15,
**caractérisé en ce que** le joint d'étanchéité (62) présente une seconde surface d'étanchéité radiale (91), qui est formée sur une section d'étanchéité inférieure (73) du joint d'étanchéité (62) et qui agit radialement vers l'intérieur, et donc en direction de l'intérieur (51) du récipient, et est appliquée contre le bord (69) du couvercle (23).

17. Pulvérisateur selon l'une des revendications 2 à 16,
**caractérisé en ce que** le joint d'étanchéité (62) est conçu comme une bande d'étanchéité périphérique dont la hauteur (h), à l'état non contraint, est d'au moins 2 cm, environ, de préférence d'au moins 3 cm, environ.

18. Pulvérisateur selon l'une des revendications 2 à 17,
**caractérisé en ce que** le pulvérisateur (1) comporte un dispositif de portage, et **en ce qu'**il est prévu, rapporté sur le récipient (7, 47, 97, 107), un dispositif de fixation pour la fixation à une structure de portage (2) du dispositif de portage, et **en ce que** le récipient (7, 47, 97, 107) est avantageusement une pièce moulée par injection.
